# EUROPÄISCHE PATENTSCHRIFT

(11) **EP 2 939 903 B1**
(45) Veröffentlichungstag und Bekanntmachung des Hinweises auf die Patenterteilung: **20.11.2019**
(21) Anmeldenummer: 15020050.9
(22) Anmeldetag: 01.04.2015
(51) Int. Cl.: B62B 1/26, E04F 21/00, B62B 1/00

(54) **FENSTERFLÜGEL-HEBEGERÄT**
WINDOW WING LIFTING DEVICE
APPAREIL DE LEVAGE DE BATTANT DE FENETRE

(30) Priorität: 03.04.2014 CH 5242014
(43) Veröffentlichungstag der Anmeldung: 04.11.2015
(73) Patentinhaber: FMTools GmbH, 8409 Winterhur (CH)
(72) Erfinder: Dähler, Axel, 5014 Gretzenbach (CH)

(56) Entgegenhaltungen:
- DE-A1- 2 325 898
- GB-A- 2 431 391
- US-A- 4 695 067
- US-A- 5 318 316
- US-A- 5 332 243
- US-A- 5 507 509

## Beschreibung

Die vorliegende Erfindung betrifft ein Fensterflügel-Hebegerät, um Fensterflügel zu transportieren und im Fensterrahmen zu montieren nach dem Oberbegriff von Anspruch 1 sowie eine Verwendung des Fensterflügel-Hebegerätes.

Die Montage von Fensterflügeln erfolgt heute in der Regel manuell mit einem Team von Monteuren, das die Fensterflügel kräfteraubend im Fensterrahmen einhängen muss.

Auf Baustellen werden oft einfache Transportkarren eingesetzt, auf welchen plattenähnliche Elemente wie beispielsweise Türen oder Fenster - hochkant um 90 Grad gekippt zur Montageachse - transportiert werden. Die Elemente können dann allerdings nur mit grossem Kraftaufwand in die Montageposition angehoben werden. Aus dem Stand der Technik ist weiterhin eine Vielzahl von Hubvorrichtungen für das Heben und Halten von Bauelementen bekannt, wobei diese Vorrichtungen häufig verfahrbar ausgelegt sind, jedoch oft eine ebene und hindernisfreie Bodenfläche voraussetzen, was auf einer Baustelle im Allgemeinen nicht vorhanden ist.

Die Patentschrift DE 10 2004 040 862 B3 beschreibt eine Vorrichtung für den Transport und die Montage von plattenartigen Bauelementen mit einem Laufwagen und einer Hubvorrichtung, wobei die Hubvorrichtung eine Einrichtung zum Verschwenken des Bauelementes um eine horizontale Achse aufweist.

In der Offenlegungsschrift DE 10 2006 052 387 A1 ist eine Vorrichtung zum Transportieren und/oder Montieren von plattenförmigen Bauelementen, insbesondere von Tür-, Tor- oder Fensterelementen beschrieben. Diese Vorrichtung lässt sich von einem einzigen Monteur bedienen, das Bauelement lässt sich über eine manuell bedienbare Hebeleinrichtung Heben und Senken. Als besonderes vorteilhaft ist erwähnt, dass kleine Hindernisse wie beispielsweise Kabel, Leisten etc. einfach überwindbar sind.

Die Patentschrift US 5 318 316 A offenbart ein 2-rädriges Gerät um Transportgüter wie Türen, Schalttafeln, schmale Kisten o.dgl. zu transportieren. Solche Güter werden beim Beladen des Gerätes automatisch zwischen einer festen und einer verschiebbaren Klemmbacke fixiert und beim Abladen automatisch wieder freigelassen. Zwei fussähnliche Teile dienen der Stabilität und der Kippsicherheit des Gerätes beim Fahren in Vorwärts- und in Rückwärts-Richtung, ein Stiel erlaubt das Steuern beim Bewegen des Gerätes. Da der Boden der Vorrichtung mit den beiden Klemmbacken auf dem Chassis des Gerätes fixiert und in der Höhe nicht verstellbar ist, liegt das Transportgut jeweils über der Radachse. Dies wirkt sich insbesondere dann als nachteilig aus, falls zum Beladen mit schweren Transportgütern diese vom Boden auf eine Höhe über der Radachse gehoben werden müssen und beim Entladen von dort wieder abgesenkt werden müssen.

Die Anforderungen an Wohnräume und Geschäftsräume haben sich in den letzten Jahren geändert. So werden einerseits lichte Räume mit grossen Fensterflächen bevorzugt, und anderseits ist die Energieeffizienz von Wohnräumen ein wichtiges Thema. Heutzutage werden für Verglasungen oft grosse Fensterflügel mit standardmässig 3-fach Verglasungen verwendet, was den Nachteil hat, dass das Gewicht von vorfabrizierten Fensterflügeln grösser geworden ist. Bei der heutzutage üblichen Art und Weise, wie Fensterflügel innerhalb eines Gebäudes und einer Etage transportiert und montiert werden, hat sich allerdings nicht stark geändert. Insbesondere bei der Montage von schweren Fensterflügeln ist die Gefahr gross, dass die Monteure Ihre Gesundheit gefährden und dass Beschädigungen am Produkt wie an der Umgebung nicht auszuschliessen sind. Die Montage von grossflächigen und schweren Fensterflügeln bedingt durch das hohe Gewicht oft den Einsatz von mindestens 2 Monteuren. Bei Neubauten werden Fensterflügel in der Regel mit einem Innen- oder Aussenlift auf die entsprechende Etage gehievt und dann unter Zuhilfenahme von Transportmitteln oder manuell an den richtigen Bestimmungsort auf der Etage transportiert respektive vom Montagepersonal getragen. Bei der Erneuerung von Fenstern bei Altbauwohnungen ist besondere Vorsicht geboten, da zusätzlich auch auf das Mobiliar innerhalb der Wohnung Rücksicht genommen werden muss um Beschädigungen am Mobiliar und an der Wohnung selber mit entsprechender Kostenfolge für den Verursacher auszuschliessen.

Ein weiterer wesentlicher Punkt bei der Montage von Fensterflügeln sind die Kosten. So werden heutzutage Fensterflügel oft in Billiglohnländern mit entsprechend tiefem Lohnniveau hergestellt. Umso stärker fallen dann im Gesamtpreis von Fenstern die Montagekosten an Ort und Stelle ins Gewicht, wodurch ein effizientes Verfahren für die Montage von Fensterflügeln sehr erwünscht ist und zunehmend an Bedeutung gewinnt.

Der vorliegenden Erfindung liegt daher die Aufgabe zu Grunde, ein Fensterflügel-Montagegerät zu offenbaren, bei dem die vorstehend genannten Nachteile eliminiert sind.

Diese Aufgabe wird erfindungsgemäss durch die in Anspruch 1 angegebenen kennzeichnenden Merkmale gelöst. Vorteilhafte Ausführungsvarianten sind in den abhängigen Ansprüchen angegeben.

Insbesondere ermöglicht die Erfindung dem Monteur, das Hebegerät von Hand zusammen mit dem Fensterflügel in der Fahrtachse (Y-Koordinate) unter einem Winkel zum Fensterrahmen hinzubewegen, bis die Position "Einhängen" erreicht ist. Nun kann der Monteur mit dem Hebesystem den Fensterflügel in der Hebeachse (Z-Koordinate) auf die Höhenposition "Einhängen" bringen und durch Drehung des Hebegerätes und durch Kippen (Drehung des Hebegerätes um die Radachse, X-Koordinate) den Fensterflügel so in Position bringen, dass die Bänder und Zapfen des Fensterflügels mit den entsprechenden Bändern und Zapfen des Fensterrahmens ohne Kraftaufwand zuerst unten und nachher oben eingehängt werden können.

Grundsätzlich kann ein einzelner Monteur das Fensterflügel-Hebegerät bedienen und mit diesem Gerät Fensterflügel ohne grossen körperlichen Kraftaufwand effizient transportieren und im Fensterrahmen montieren. Ein mühsames Tragen und Heben von Fensterflügeln entfällt, ein zeitaufwendiges Umladen von einem Transportgerät auf ein Hebegerät erübrigt sich.

Gemäss der vorliegenden Erfindung werden die beiden Seitenelemente von je einem mit einer Feststellbremse versehenen Rad getragen, was dem Monteur ein einfaches Bedienen von Hand erlaubt und auch ein Schwenken des Fensterflügel-Hebegerätes von der vertikalen Lage in die horizontale Lage mit wenig Kraftaufwand ermöglicht.

Die beiden Seitenelemente sind erfindungsgemäss sowohl nach vorne als auch nach hinten kippbar, damit der Fensterflügel im Hebesystem die richtige Position zum "Einhängen" annehmen kann.

Das Hebesystem umfasst erfindungsgemäss auch eine Walze mit einer elektrischen Antriebseinheit und ein Tragband, das am einen Ende in der Walze der Antriebseinheit fixiert ist, sowie eine Klemmschiene, auf der das andere Tragbandende fixiert ist. Eine mechanische Höhenverstellung erlaubt es, das Tragband in der Vertikalen erfindungsgemäss so anzuheben, dass beim Verfahren vom Fensterflügel-Hebegerät die Fensterflügel-Unterkante genügend Bodenfreiheit hat.

Die beiden Seitenelemente sind erfindungsgemäss durch ein verstellbares, federndes Bodenelement so verbunden, dass ab Unterkante des Fensterflügels eine Bodenfreiheit von bis zu 5 mm entsteht und somit in jedem Kippwinkel ein Fahren mit einer Ladung ermöglicht wird.

Ein je nach Gewicht und Bauart des Fensterflügels unterschiedliches Tragprofil wird erfindungsgemäss zwischen Fensterflügelprofil und Tragband eingelegt und erlaubt die Aufnahme aller auf dem Markt vorhandenen Bauarten von Fensterflügeln.

Das Fensterflügel - Hebegerät kann erfindungsgemäss bei kleinen Fensterflügelgewichten vom Monteur auch über Stufen hinaufgezogen werden.

Die vorliegende Erfindung wird im Folgenden anhand von Ausführungsbeispielen unter Bezugnahme auf Figuren weiter erläutert. Dabei zeigen:
- Fig. 1: eine perspektivische Darstellung eines erfindungsgemässen Fensterflügel-Hebegerätes,
- Fig. 2: eine perspektivische Darstellung des Hebesystems gemäss Fig. 1,
- Fig. 3: eine perspektivische Darstellung der ersten Kippsicherung von vorn gemäss Fig. 1,
- Fig. 4: eine perspektivische Darstellung der zweiten Kippsicherung von hinten gemäss Fig. 1,
- Fig. 5: eine perspektivische Darstellung des Hebesystems gemäss Fig. 1,
- Fig. 6: eine perspektivische Darstellung vom Tragprofil gemäss Fig. 1,
- Fig. 7: eine perspektivische Darstellung der verstellbaren Bedienelemente gemäss Fig. 1, und
- Fig. 8: eine schematische Darstellung der seitlichen Abstützung gemäss Fig. 1.

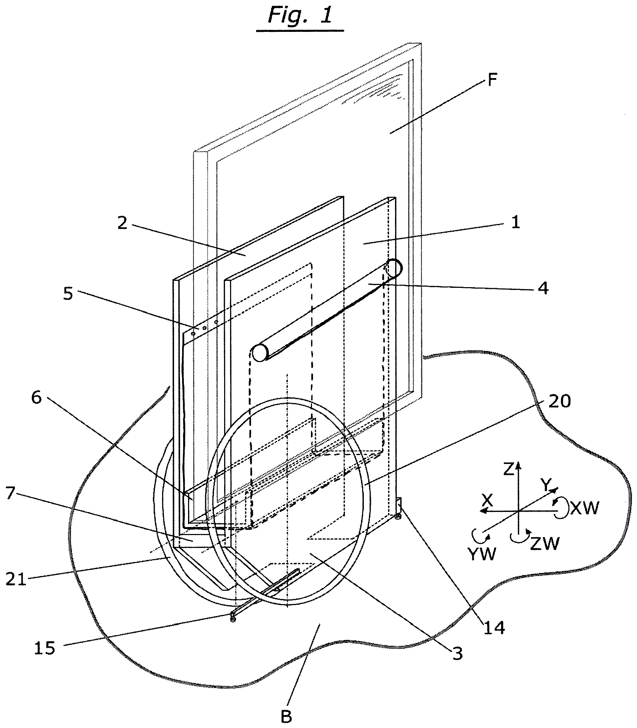

Fig. 1 zeigt in perspektivischer Darstellung ein Hebegerät mit dem Zweck, den Fensterflügel F auf die für die Montage erforderliche Höhe anzuheben. Das erste Seitenelement 1 ist mit dem zweiten Seitenelement 2 auf der Unterseite der beiden Seitenelemente durch ein verstellbares federndes Bodenelement 3 verbunden und lässt bis zur Unterkante des Fensterflügels F eine Bodenfreiheit im Bereich von etwa 2 bis 5 mm entstehen. Das erste Seitenelement 1 und das zweite Seitenelement 2 werden erfindungsgemäss von je einem Rad 20,21 getragen. Der Fensterflügel F wird vom Monteur auf das Tragband 9 gelegt, bis der Fensterflügel F am Halteelement 7 des ersten Seitenelement 1 ansteht. Das Fensterflügel-Hebegerät kann durch den Monteur von der vertikalen Lage in eine horizontale Lage geschwenkt werden. Die beiden Seitenelemente 1,2 sind sowohl nach vorne als auch nach hinten kippbar, damit der Fensterflügel F im Hebesystem 4 die richtige Position zum Einhängen des Fensterflügels annehmen kann. Das Tragband 9 kann - je nach Grösse der Fensterflügel F - auch aus zwei oder mehreren Tragbändern 9 bestehen. Das lose ausgefahrene Tragband 9 liegt auf dem Bodenelement 3 auf. Sofern mehrere Tragbänder im Hebesystem 4 eingebaut sind, kann das mindestens eine Tragband 9 erfindungsgemäss jedoch auch bis auf den Boden zu liegen kommen, was einer Bodenfreiheit von etwa 2 mm entspricht. Falls notwendig, kann das Bodenelement 3 auch entfernt werden. Das Eigengewicht des auf dem Tragband 9 platzierten Fensterflügels F bewirkt, dass die beiden Seitenelement 1 und 2 an den Fensterflügel F gepresst werden, wodurch das Fensterflügel-Hebegerät eine stabile, einhändig bedienbare und leicht bewegliche Einheit bildet. Je nach Gewicht und Bauart vom Fensterflügel F wird erfindungsgemäss zwischen Fensterflügelprofil und Tragband 9 ein Tragprofil 6 eingelegt. Das Tragprofil 6 erlaubt alle auf dem Markt vorhandenen Fensterflügel F aufzunehmen. Zusätzlich hat das Fensterflügel-Hebegerät an mindestens einem Rad 20,21 eine (in Fig. 1 nicht dargestellte) Feststellbremse. Das Fensterflügel - Hebegerät kann durch einen am Rad rechts 20 und am Rad links 21 angebrachten marktüblichen elektromechanischem Antrieb ausgerüstet werden.

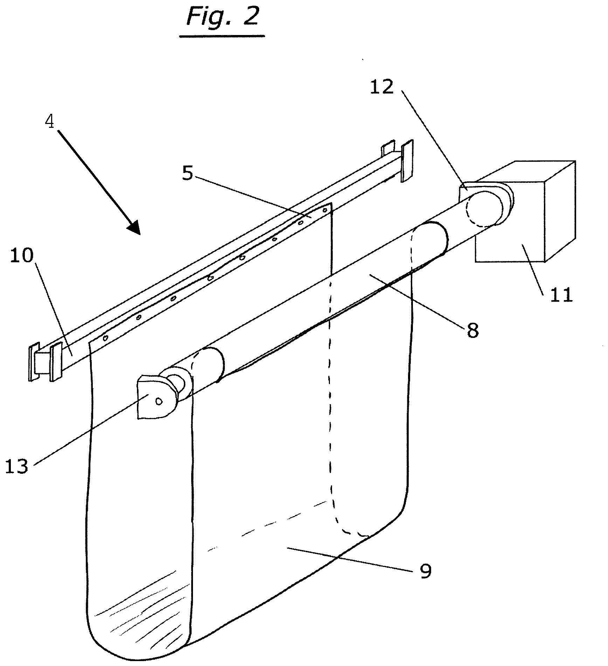

Fig. 2 zeigt wiederum in perspektivischer Darstellung ein zwischen den beiden Seitenelement 1,2 und über dem Bodenelement liegendes Hebesystem 4 mit dem Tragband 9 zur Aufnahme des mindestens einen Fensterflügels F. Das Hebesystem 4 besteht aus einer elektromechanischen Antriebseinheit 11, einem Tragband 9, welches in einer Walze 8 der Antriebseinheit 11 befestigt ist, einer Klemmschiene 5 auf der das Ende des Tragbandes 9 fixiert ist und einer mechanischen Höhenverstellung 10 um das Tragband 9 in der Vertikalen anzuheben, damit beim Bewegen des Fensterflügel-Hebegerätes die Unterkante des Fensterflügels F genügend Bodenfreiheit hat. Die elektromechanische Antriebseinheit 11 ist erfindungsgemäss oberhalb der maximalen Hebehöhe von 1200 mm vom Fensterflügel F beispielsweise im ersten Seitenelement 1 eingebaut, so dass das Tragband 9 auf der durch die elektromechanische Antriebseinheit 11 angetriebenen Walze 8 fixiert ist und innen am ersten Seitenelement 1 lose hängend nach unten geführt wird, über dem Bodenelement 3 lose aufliegt und innen am zweiten Seitenelement 2 wieder lose nach oben bis zur Klemmschiene 5 geführt wird. Die Walze 8 ist drehbar fixiert mittels der Lagerung Walze antriebsseitig 12 und der Lagerung Walze 13.

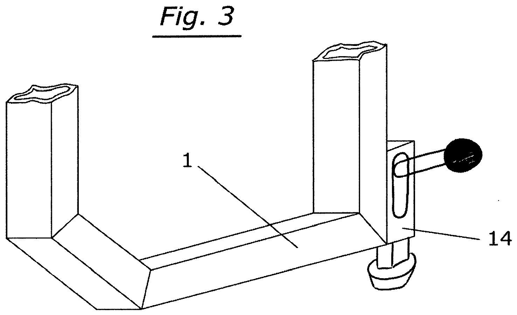

Fig. 3 zeigt in perspektivischer Darstellung, als Ansicht von hinten, eine an einem ersten Seitenelement 1 angeordnete verstellbare erste Kippsicherung 14, die das Einstellen eines bestimmten Kippwinkels für die Positionierung eines Fensterflügels F bei der Montage ermöglicht.

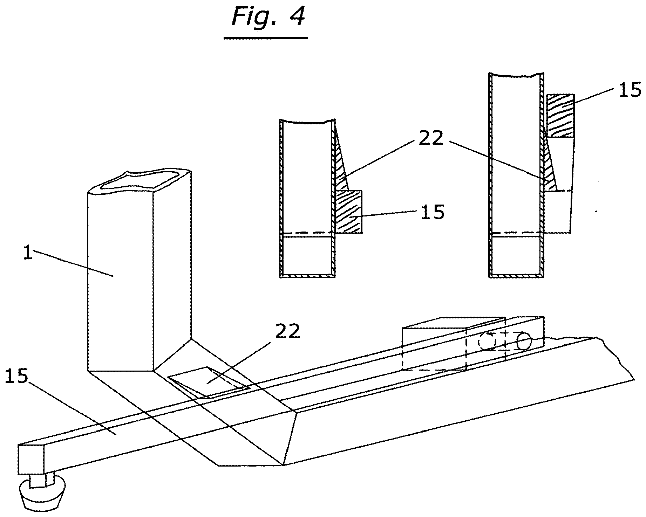

Fig. 4 zeigt in perspektivischer Darstellung, als Ansicht von vorne, eine an einem ersten Seitenelement 1 angeordnete bewegliche und einstellbare zweite Kippsicherung 15 mit dem Sicherungskeil 22, wobei diese von Hand oder mittels Fuss einstellbar ist.

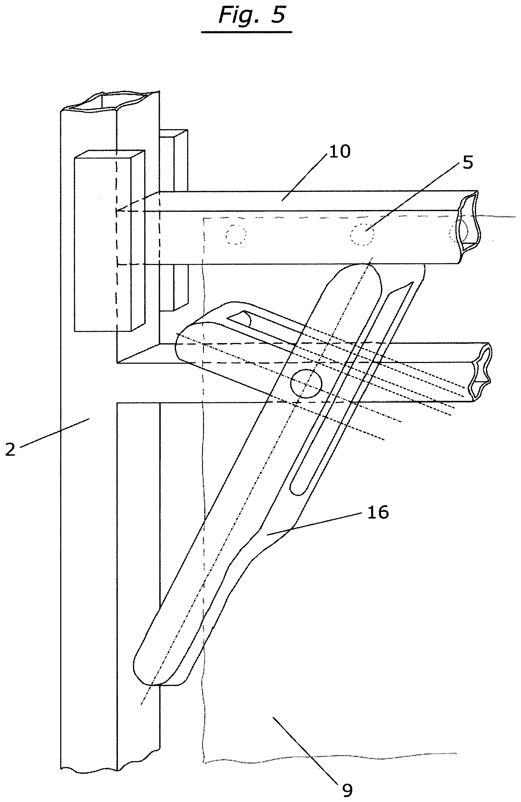

Fig. 5 zeigt das Hebesystem in perspektivischer Darstellung eine mechanische Höhenverstellung 10 mit dem am zweiten Seitenelement 2 befestigten Hebelsystem 16 und der Klemmschiene 5, das eine Verschiebung des Tragbandes 9 in vertikaler Richtung ermöglicht.

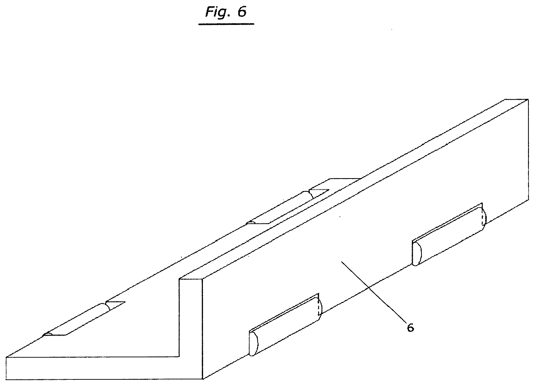

Fig. 6 zeigt wiederum in perspektivischer Darstellung eine mögliche Ausgestaltung eines Tragprofils 6.

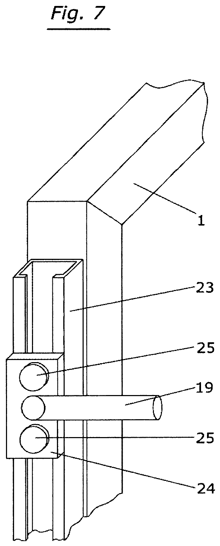

Fig. 7 zeigt wiederum in perspektivischer Darstellung die beispielsweise am ersten Seitenelement 1 und - wenn nötig - auch am zweiten Seitenelement 2 angeordneten Bedienelemente 19, die mittels Klemmwagen 24 und Klemmelement 25 festgeklemmt und am Klemmprofil 23 in der Höhe verstellbar sind.

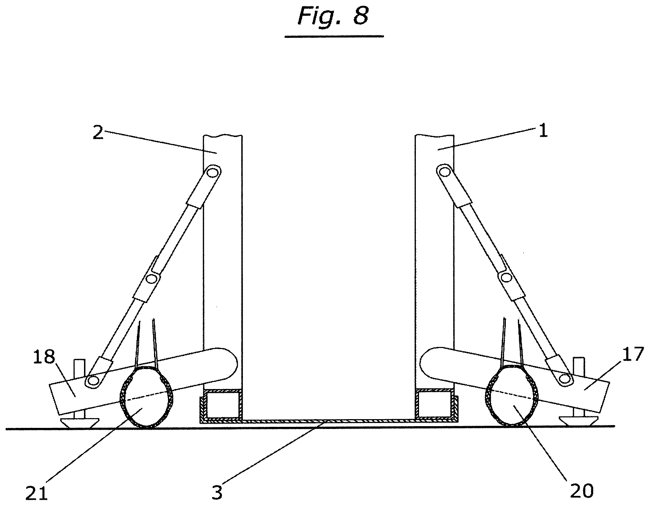

Fig. 8 zeigt in schematischer Darstellung die über das Bodenelement 3 miteinander verbundenen Seitenelementen 1,2. Die verstellbaren Stützen 17 und 18 sind mit dem Rad rechts 20 respektive mit dem Rad links 21 verbunden und verhindern ein seitliches Kippen des Fensterflügel-Hebegerätes.

Die vorher beschriebenen Ausführungsbeispiele eignen sich als Lösung für maximal flexiblen Einsatz der heute gängigen Systeme von Bändern und Zapfen.

### Bezugszeichenliste

- 1: erstes Seitenelement
- 2: zweites Seitenelement
- 3: Bodenelement (fix oder verstellbar)
- 4: Hebesystem
- 5: Klemmschiene
- 6: inliegendes Tragprofil
- 7: Halteelement
- 8: Walze
- 9: Tragband
- 10: mechanische Höhenverstellung
- 11: elektromechanische Antriebseinheit
- 12: Lagerung Walze antriebsseitig
- 13: Lagerung Walze
- 14: verstellbare erste Kippsicherung
- 15: einstellbare bewegliche zweite Kippsicherung
- 16: Hebelsystem
- 17: erste Stütze
- 18: zweite Stütze
- 19: Bedienelemente
- 20: Rad rechts
- 21: Rad links
- 22: Sicherungskeil
- 23: Klemmprofil
- 24: Klemmwagen
- 25: Klemmelemente
- B: Bodenbereich
- F: Fensterflügel
- X: x-Achse
- Y: y-Achse
- Z: z-Achse
- XW: Drehwinkel in x-Achse
- YW: Drehwinkel in y-Achse
- ZW: Drehwinkel in z-Achse

## Patentansprüche

1. Fahrbares Fensterflügel-Hebegerät, bestehend aus zwei von je einem Rad (20,21) getragenen im Wesentlichen vertikal angeordneten Seitenelementen (1,2), die mit einem horizontal angeordneten Bodenelement (3) beweglich verbunden sind, einem Halteelement (7), Mitteln für mindestens eine Kippsicherung (14,15), zwei Stützen (17, 18), mindestens einem Bedienelement (19) und weiter beaufschlagt mit einem Hebesystem (4), **dadurch gekennzeichnet, dass** die Bodenfreiheit zwischen dem Bodenelement (3) und dem Boden (B) mindestens 5 mm beträgt und dass das Ladegut mittels dem Hebesystem (4) bis zu einer maximalen Hebehöhe von 1200 mm angehoben werden kann.

2. Fahrbares Fensterflügel-Hebegerät gemäss Anspruch 1, **dadurch gekennzeichnet, dass** das Hebesystem aus einer elektromechanischen Antriebseinheit (11) und einer Höhenverstellung (10) und einer in zwei Lagern (12,13) bewegbaren Walze (8) und mindestens einem Tragband (9) und einer Klemmschiene (5) besteht.

3. Fahrbares Fensterflügel-Hebegerät gemäss Anspruch 1, **dadurch gekennzeichnet, dass** an mindestens einem Seitenelement (1,2) eine einstellbare, bewegliche Stütze (17,18) angeordnet ist um ein seitliches Kippen des Fensterflügel-Hebegerätes zu verhindern.

4. Fahrbares Fensterflügel-Hebegerät gemäss Anspruch 1, **dadurch gekennzeichnet, dass** in Fahrtrichtung "Vorwärts" (y-Achse) mittels der an einem Seitenelement (1,2) angeordneten verstellbaren ersten Kippsicherung (14) eine Drehung (XW) um die Radachse (x-Achse) mit einem Kippwinkel von bis zu 5 Winkelgraden zur Bodenebene möglich ist.

5. Fahrbares Fensterflügel-Hebegerät gemäss den Ansprüchen 1 und 4, **dadurch gekennzeichnet, dass** in Fahrtrichtung "Rückwärts" (y-Achse), mittels einem vorzugsweise am ersten Seitenelement (1) angeordneten Sicherungskeil (22) der einstellbaren, beweglichen zweiten Kippsicherung (15), ein "nach-hinten Kippen" verhindert wird und eine Drehung (XW) um die Radachse (x-Achse) mit einem Kippwinkel von kleiner oder gleich 10 Winkelgraden zur Bodenebene möglich ist.

6. Fahrbares Fensterflügel-Hebegerät gemäss Anspruch 2, **dadurch gekennzeichnet, dass** die Walze (8) mittels der zwei Lager (12, 13) an dem ersten Seitenelement (1) angeordnet ist und das mindestens eine Tragband (9) mittels der Klemmschiene (5) und der mechanischen Höhenverstellung (10) an dem zweiten Seitenelement (2) angeordnet ist.

7. Fahrbares Fensterflügel-Hebegerät gemäss Anspruch 1, **dadurch gekennzeichnet, dass** die Bedienelemente (19) ergonomisch angeordnet sind und in der Höhe im Klemmprofil (23) mittels Klemmwagen (24) und den Klemmelementen (25) einstellbar festgeklemmt sind.

8. Fahrbares Fensterflügel-Hebegerät gemäss den Ansprüchen 2 oder 6, **dadurch gekennzeichnet, dass** je nach Gewicht und Bauart des Fensterflügels (F) für die Aufnahme des Fensterflügels (F) im mindestens einen Tragband (9) ein unterschiedlich geformtes Tragprofil (6) eingelegt werden kann.

9. Verwendung des fahrbaren Fensterflügel-Hebegerätes gemäss den Ansprüchen 1-8 zum Transport von plattenähnlichen Gegenständen.

## Claims

1. Mobile window sash lifting device, consisting of two side elements (1,2) which are each supported by one wheel (20,21), arranged essentially vertically, which are movably connected to a horizontally arranged base element (3), a holding element (7), means for at least one anti-tipping device (14,15), two supports (17, 18), at least one operating element (19) and further acted upon by a lifting system (4), **characterized in that** the ground clearance between the base element (3) and the bottom (B) is at least 5 mm and that the cargo can be lifted up to a maximum lifting height of 1200 mm by means of the lifting system (4).

2. Mobile window sash lifting device according to claim 1, **characterized in that** the lifting system consists of an electromechanical drive unit (11) and a height adjustment (10) and a roller (8) movable in two bearings (12, 13) and at least one support belt (9) and a clamping rail (5).

3. Mobile window sash lifting device according to claim 1, **characterized in that** on at least one side element (1,2) an adjustable, movable support (17,18) is arranged in order to prevent lateral tilting of the window sash lifting device.

4. Movable window sash lifting device according to claim 1, **characterized in that** in the direction of travel "forward" (y-axis) by means of a first adjustable anti-tipping mechanism 14) arranged on a side element (1,2), a rotation (XW) around the wheel axis (x-axis) with a tilt angle of up to 5 angular degrees to the ground plane is possible.

5. Movable window sash lifting device according to claims 1 and 4, **characterized in that** in the direction of travel, "reverse" (y-axis) by means of a securing wedge (22), preferably arranged on the first side element (1), of the adjustable, movable second anti-tipping mechanism (15), a "rearward tilting" is prevented and allows a rotation (XW) around the wheel axis (x-axis) with a tilt angle of less than or equal to 10 angular degrees to the ground plane.

6. Mobile window sash lifting device according to claim 2, **characterized in that** the roller (8) is fixed to the first side element (1) by means of the two bearings (12, 13) and the at least one support belt (9) is arranged on the second side element (2) by means of the clamping rail (5) and the mechanical height adjustment (10).

7. Mobile window sash lifting device according to claim 1, **characterized in that** the operating elements (19) are ergonomically arranged and are adjustably clamped in the height in the clamping profile (23) by means of clamping carriage (24) and the clamping elements (25) .

8. Mobile window sash lifting device according to claim 2 or claim 6, **characterized in that**, depending on the weight and construction of the window sash (F), a differently shaped supporting profile (6) can be inserted in the at least one supporting belt (9).

9. Use of the mobile window sash lifting device according to claims 1 to 8 for transporting flat objects.

## Revendications

1. Mobile dispositif de levage pour vantail de fenêtre, constitué de deux éléments latéraux (1,2) qui sont chacun supportés par une roue (20,21), disposés sensiblement verticalement, qui sont reliés mobiles à un élément de base (3) disposé horizontalement, un élément de maintien (7), des moyens pour au moins un dispositif anti-basculement (14,15), deux supports (17, 18), au moins un élément de commande (19) et sollicité en outre par un système de levage (4), **caractérisé en ce que** le jeu de sol entre l'élément de base (3) et le fond (B) est au moins 5 mm et que la cargaison peut être soulevée jusqu'à une hauteur de levage maximale de 1200 mm au moyen du système de levage (4).

2. Mobile dispositif de levage pour vantail de fenêtre selon la revendication 1, **caractérisé en ce que** le système de levage est constitué d'une unité d'entraînement électromécanique (11) et un réglage de hauteur (10) et un rouleau (8) mobile dans deux paliers (12, 13) et au moins une courroie de support (9) et un rail de serrage (5).

3. Mobile dispositif de levage pour vantail de fenêtre selon la revendication 1, **caractérisé en ce que** sur au moins un élément latéral (1,2) un support mobile réglable (17,18) est agencé de façon à empêcher une inclinaison latérale du dispositif de levage pour vantail de fenêtre.

4. Mobile dispositif de levage pour vantail de fenêtre selon la revendication 1, **caractérisé en ce que**, dans le sens de déplacement "vers l'avant" (axe y) au moyen d'un premier mécanisme anti-basculement (14) disposé sur un élément latéral (1,2), une rotation (XW) autour de l'axe de roue (axe x) avec un angle d'inclinaison allant jusqu'à 5 degrés angulaires par rapport au plan de sol est possible.

5. Mobile dispositif de levage pour vantail de fenêtre selon les revendications 1 et 4, **caractérisé en ce que**, dans le sens de déplacement, "inversé" (axe y) au moyen d'une cale de fixation (22) disposée de préférence sur le premier élément latéral (1), du deuxième mécanisme anti-basculement mobile réglable (15), un "basculement vers l'arrière" est empêché et permet une rotation (XW) autour de l'axe de roue (axe x) avec un angle d'inclinaison inférieur ou égal à 10 degrés angulaires par rapport au plan de sol.

6. Mobile dispositif de levage pour vantail de fenêtre selon la revendication 2, **caractérisé en ce que** le rouleau (8) est fixé au premier élément latéral (1) au moyen des deux paliers (12, 13) et la ou les courroies de support (9) sont disposées sur le deuxième élément latéral (2) au moyen du rail de serrage (5) et du réglage de hauteur mécanique (10).

7. Mobile dispositif de levage pour vantail de fenêtre selon la revendication 1, **caractérisé en ce que** les éléments d'actionnement (19) sont disposés de manière ergonomique et sont serrés de manière réglable en hauteur dans le profilé de serrage (23) au moyen d'un chariot de serrage (24) et des éléments de serrage (25).

8. Mobile dispositif de levage pour vantail de fenêtre selon la revendication 2 ou la revendication 6, **caractérisé en ce que**, en fonction du poids et de la construction du vantail de fenêtre (F), un profilé de support (6) de forme différente pouvant être inséré dans la ou les courroies de support (9).

9. Utilisation du mobile dispositif de levage pour vantail de fenêtre selon les revendications 1 à 8 pour le transport d'objets plats.
